(19) **Europäisches Patentamt**

**European Patent Office**

**Office européen des brevets**

(11) Publication number: **0 540 085 B1**

(12) **EUROPEAN PATENT SPECIFICATION**

(45) Date of publication of patent specification: **29.03.95**  (51) Int. Cl.6: **A23L 1/19**

(21) Application number: **92203193.5**

(22) Date of filing: **19.10.92**

(54) **Spoonable, soured non-dairy creams.**

(30) Priority: **31.10.91 EP 91310097**

(43) Date of publication of application:
**05.05.93 Bulletin 93/18**

(45) Publication of the grant of the patent:
**29.03.95 Bulletin 95/13**

(84) Designated Contracting States:
**AT BE CH DE DK ES FR GB GR IE IT LI NL PT SE**

(56) References cited:
**US-A- 3 433 643**
**US-A- 4 199 608**
**US-E- 27 381**

(73) Proprietor: **UNILEVER N.V.**
**P.O. Box 760**
**NL-3000 DK Rotterdam (NL)**

(84) Designated Contracting States:
**BE CH DE DK ES FR GR IT LI NL PT SE AT**

(73) Proprietor: **UNILEVER PLC**
**Unilever House**
**Blackfriars**
**P.O. Box 68**
**London EC4P 4BO (GB)**

(84) Designated Contracting States:

**GB IE**

(72) Inventor: **Campbell, Iain James Unilever Res. Colworth Lab.**
**Colworth House,**
**Sharnbrook**
**Bedford MK44 1LO (GB)**
Inventor: **Morley, Gerald, Unilever Res. Colworth Lab.**
**Colworth House,**
**Sharnbrook**
**Bedford MK44 1LO (GB)**
Inventor: **Martine, Jean Claude**
**190 C Rue des Ambassadeurs**
**F-95610 Eragny,**
**Oise (FR)**

(74) Representative: **Hartong, Richard Leroy et al**
**Unilever N.V. Patent Division**
**P.O. Box 137**
**NL-3130 AC Vlaardingen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Spoonable creams are well known in Great Britain. Although the rheological parameters of creams and emulsions are defined in P.Sherman, Emulsion Science, Academic Press 1968, the term spoonable is not defined therein. According to our definition, a spoonable cream should display the following rheological behaviour at 5°C.

1) the yield value (also called: yield stress) should be more than 50 Pa extrapolated from shear rates between 100-300 $S^{-1}$ (Bingham);

2) the Bingham viscosity should be less than 500 mPa s between shear rates of 100-300 $S^{-1}$;

3) the failure to stress should occur at a strain of less than 0.5 Radians.

Yield values and Bingham viscosities were determined utilising the Carrimed Rheometer. Measurements were performed at 5°C, using 4° cone and plate geometry. The shear stress was increased from zero at a rate of 60 Pa/min, and shear rates were measured until values in excess of 600 $s^{-1}$ were achieved. The experiment was then terminated. A graph of shear stress vs shear rate was plotted, and a straight line fitted to the curve between the shear rates of 100-300$s^{-1}$. The slope of this line was the Bingham viscosity. The yield stress was determined by extrapolation of this line back to zero shear rate.

The failure to stress measurements were determined utilising the Carrimed Rheometer. Measurements were performed at 5°C, using a 4° cone and plate geometry. The experiments performed were torque sweeps in oscillation mode. The samples were oscillated at a frequency of 1Hz, as the torque was increased from 50-5000 $\mu$Nm in thirty steps. The measurement time at each torque value was 10 sec, and the time between measurements was 5 sec. The parameters measured were storage modulus ($G^I$), loss modulus ($G^{II}$) and strain (in radians). A graph of $G^I$ and $G^{II}$ vs strain was then plotted. At low strain values the samples displayed solid-like characteristics, and $G^I > G^{II}$. At higher strain values $G^{II} > G^I$ and the failure to stress was defined as the strain at which $G^I = G^{II}$.

Although spoonable dairy creams are known that meet these requirements very well, the stability of dairy creams is still a problem when using longer storage times. It is also for the purpose of obtaining healthier products, i.e. products containing more unsaturated or at least fewer saturated fatty acid moieties, that attempts have been made to produce a non-dairy equivalent of a soured, spoonable dairy cream. However, so far any efforts to produce a soured, spoonable non-dairy cream, thus one containing non-dairy fats, in particular vegetable fats, have been unsuccessful : Either the stability or the rheology of the creams was insufficient.

Examples of soured, non-dairy creams are disclosed in e.g. US 3,433,643, according to which soured creams are made by a process, wherein calcium carbonate and a buffer are incorporated in the product. However, application of this process cannot, at least not without great difficulties, lead to soured creams with the desired rheology of a spoonable cream. Moreover, these creams require the presence of $CaCO_3$.

According to US 4,119,608 imitation creams are known that comprise large amounts of partial glycerides, whereas only small amounts of triglycerides are present. Imitation sour creams, made by chemical acidification are known from US: Re 27,381. Such creams, however, are difficult or even impossible to heat. After heating the resulting product will not display our characteristics for a spoonable cream.

Therefore, so far no non-dairy equivalent of a soured, spoonable dairy cream which is free from calcium carbonate and/or emulsifiers, was available.

We have now found a solution to the problems mentioned above. Therefore, our invention is concerned in the first place with soured, water-continuous, non-dairy creams (NDC's) free from calcium carbonate and/or emulsifiers, comprising 20-60 wt.% of a triglyceride fat, and a protein component, which soured NDC's are stable and spoonable. In this respect, the term stable is defined as : the cream can be stored for at least 14 days at a temperature of 0-15°C, such that the rheology remains within our definition of spoonable, no serum leakage occurs, and the cream remains microbiologically stable.

We have defined the term spoonable above, based on standard rheological tests. Such tests have been discussed by Sherman.

The pH of our soured, spoonable NDC's is in general 4.0-4.8, preferably 4.4-4.6.

Although the fat level of our new compositions can range from 15-60 wt.%, it is preferred to use fat levels of 25-45 wt.%.

The fats that can be used in our NDC's are well-known vegetable fats. Preferred fats, however, are : palmkernel oil, soybean oil, rapeseed oil, coconut oil, sunflower oil, safflower oil, butterfat or fully or partially hardened fractions thereof. It should be noted here that butterfat is only applied in a mixture with a vegetable fat.

It is also possible to use indigestible "fats", such as the well-known sucrose poly fatty acid esters (SPE's) as "fat" component in our new non-dairy creams.

If butterfat is used, it can be present in amounts up to 40 wt.%, preferably 10-30 wt.%, of the fat phase.

Although the highest data for yield stress are obtained when firm (i.e. hardened) fat blends are used, it is possible to use fat compositions that are completely liquid. As these liquid fats are normally highest in unsaturated fatty acids, these compositions will be the healthiest.

In order to obtain good taste, the correct acidity level, but also good rheological properties, it is essential that a protein component be present in our compositions. Very suitable milk protein components are buttermilk powder (B.M.P) and skimmed milk powder (S.M.P). It is of course also possible to add flavours to our NDC's.

The amounts of B.M.P and/or S.M.P are suitably between 1.0-15.0 wt.% (calculated on total NDC), preferably between 4.0 and 12.0 wt.%.

Another important factor for the rheological and organoleptic properties of our NDC's is the droplet size of the fat droplets in our emulsions. The droplet size should preferably not be greater than 5.0 $\mu$m, more preferably less than 2.0 $\mu$m.

The invention is further concerned with a process for the preparation of a soured NDC. This process comprises at least the steps of :
- making a pre-mix of vegetable fat(s), protein component(s), in particular B.M.P and/or S.M.P, water and flavours;
- heating the pre-mix to 40-90°C;
- homogenizing the pre-mix in at least a single stage homogenizer under pressure;
- cooling the homogenized pre-mix to a temperature of 2-30°C;
- adding to the pre-mix a culture medium capable of converting lactose into lactic acid by fermentation;
- fermenting the pre-mix until a pH = 4.0-4.6;
- storing the fermented pre-mix at a temperature of less than 15°C, preferably 0-10°C.

In the above-mentioned process the homogenization pressure is preferably in the range of 10-250 bar. If the pressure is above 100 bar, then normally a second stage homogenization of 20-100 bar is required.

This process is applied for the preparation of the soured, spoonable NDC's as disclosed above.

EXAMPLE I

A premix was made of the following components

|  | wt% |
|---|---|
| Fat (Fruit D'or Margarine blend) | 30 |
| BMP | 9 |
| Water | 61 |

This premix was heated to 60°C, homogenised at 10 bar, and cooled to 5°C, whereupon 1% of a culture medium was added. The cream was kept at 20°C for 24 hours and stored at 5-10°C. The rheological data were as follows:

| Extrapolated yield stress | 255 Pa |
|---|---|
| Bingham viscosity | 22 mPas |
| Failure to stress | 0.011 radians |

EXAMPLE II

Example I was repeated except that sunflower oil was used as the fat phase.
The rheological data were as follows.

| Extrapolated yield stress | 74 Pa |
|---|---|
| Bingham viscosity | 145 mPas |
| Failure to stress | 0.047 radians |

## Claims

1. A soured, water-continuous non-dairy cream (NDC), free from calcium carbonate and/or emulsifiers, comprising 15-60 wt.% of a triglyceride fat and a protein component characterized in that the soured NDC is stable and spoonable and displays the following characteristics at 5°C :
   a) a yield value of more than 50 Pa extrapolated from shear rates between 100-300 $S^{-1}$ (Bingham);
   b) a Bingham viscosity of less than 500 mPa s between shear rates of 100-300 $S^{-1}$;
   c) failure to stress at a strain of less than 0.5 Radians.

2. A soured NDC according to Claim 1, wherein the pH of the NDC is 4.0-4.8.

3. A soured NDC according to Claims 1-2, wherein the fat level is 25-45 wt.%.

4. A soured NDC according to Claims 1-3, wherein the fat is at least one of the group consisting of palmkernel oil, soybean oil, rapeseed oil, coconut oil, sunflower oil, safflower oil, butterfat, sucrose, poly fatty acid esters, or fully or partially hardened fractions thereof, with the prerequisite that butterfat is always mixed with a vegetable fat.

5. A soured NDC according to Claim 4, wherein the butterfat is present in amounts of 0-40 wt.% of the total fat phase.

6. A soured NDC according to Claim 1, wherein the fat is a fully liquid oil or a blend of liquid oils.

7. A soured NDC according to Claims 1-6, wherein the NDC contains 1.0-15.0 wt.% of buttermilk powder and/or skimmed milk powder as protein component.

8. A soured NDC according to Claim 7, wherein the level of buttermilk powder and/or skimmed milk powder is 4.0-12.0 wt.%.

9. A soured NDC according to Claims 1-8, wherein the droplet size of the fat droplets is less than 5.0 $\mu$m, preferably less than 2.0 $\mu$m.

10. A process for the preparation of a soured NDC comprising the steps of :
    - making a pre-mix of vegetable fat(s), protein component(s) and water;
    - heating the pre-mix to 40-90°C;
    - homogenizing the pre-mix in at least a single stage under pressure;
    - cooling the homogenized pre-mix to a temperature of 2-30°C;
    - adding to the pre-mix a culture medium capable of converting lactose into lactic acid by fermentation;
    - fermenting the pre-mix until a pH = 4.0-4.6;
    - storing the fermented pre-mix at a temperature of less than 15°C, preferably 0-10°C.

11. A process according to Claim 10, wherein a two-stage homogenization procedure is used, applying a pressure of 10-250 bar in the first stage and 20-100 bar in the second stage.

12. A process according to Claims 10-11, wherein the process is applied for the preparation of stable, spoonable, soured NDC's with the composition of Claims 1-9.

## Patentansprüche

1. Gesäuerte, wasserkontinuierliche, nicht-milchhaltige Sahne (NDC), frei von Calciumcarbonat und/oder Emulgatoren, welche 15 bis 60 Masse-% eines Triglycerid-Fetts und eine Proteinkomponente umfaßt, dadurch gekennzeichnet, daß die gesäuerte NDC stabil und löffelfertig ist, und die folgenden Charakteristika bei 5°C aufweist:
   a) eine Fließgrenze von mehr als 50 Pa, extrapoliert aus Scherraten zwischen 100 bis 300 $s^{-1}$ (Bingham);
   b) eine Bingham-Viskosität von weniger als 500 mPas zwischen Scherraten von 100 bis 300 $s^{-1}$;
   c) Aufreißen bei einer Verformung von weniger als 0,5 rad.

4

2.  Gesäuerte NDC nach Anspruch 1, wobei der pH der NDC 4,0 bis 4,8 beträgt.

3.  Gesäuerte NDC nach Anspruch 1 oder 2, bei welcher der Fettgehalt 25 bis 45 Masse-% beträgt.

4.  Gesäuerte NDC nach einem der Ansprüche 1 bis 3, bei welcher das Fett zumindest eines der Gruppe bestehend aus Palmkernöl, Sojabohnenöl, Rapsöl, Kokosnußöl, Sonnenblumenöl, Safloröl, Butterfett, Saccharose, Polyfettsäureestern oder vollständig oder teilweise gehärteten Fraktionen hievon ist, mit der Maßgabe, daß Butterfett immer mit einem Pflanzenfett gemischt ist.

5.  Gesäuerte NDC nach Anspruch 4, bei welcher das Butterfett in Mengen von 0 bis 40 Masse-% der gesamten Fettphase vorhanden ist.

6.  Gesäuerte NDC nach Anspruch 1, bei welcher das Fett ein vollständig flüssiges Öl oder eine Mischung flüssiger Öle ist.

7.  Gesäuerte NDC nach einem der Ansprüche 1 bis 6, wobei die NDC 1,0 bis 15,0 Masse-% Buttermilchpulver und/oder entrahmtes Milchpulver als Proteinkomponente enthält.

8.  Gesäuerte NDC nach Anspruch 7, bei welcher der Gehalt an Buttermilchpulver und/oder entrahmtem Milchpulver 4,0 bis 12 Masse-% beträgt.

9.  Gesäuerte NDC nach einem der Ansprüche 1 bis 8, bei welcher die Tröpfchengröße der Fetttröpfchen weniger als 5,0 $\mu$m, vorzugsweise weniger als 2,0 $\mu$m, beträgt.

10. Verfahren zur Herstellung einer gesäuerten NDC, welches die Schritte umfaßt:
    Herstellen einer Vormischung aus Pflanzenfett(en), Proteinkomponente(n) und Wasser;
    Erhitzen der Vormischung auf 40 bis 90 °C;
    Homogenisieren der Vormischung zumindest in einer Einzelstufe unter Druck;
    Abkühlen der homogenisierten Vormischung auf eine Temperatur von 2 bis 30 °C;
    Zusetzen zur Vormischung eines Kulturmediums, das durch Fermentation Lactose in Milchsäure überführen kann;
    Fermentieren der Vormischung bis auf einen pH von 4,0 bis 4,6;
    Lagern der fermentierten Vormischung bei einer Temperatur von weniger als 15 °C, vorzugsweise 0 bis 10 °C.

11. Verfahren nach Anspruch 10, bei welchem ein zweistufiges Homogenisierungsverfahren verwendet wird, wobei in der ersten Stufe in Druck von 10 bis 250 bar und in der zweiten Stufe von 20 bis 100 bar verwendet wird.

12. Verfahren nach Anspruch 10 oder 11, wobei das Verfahren zur Herstellung stabiler, löffelfertiger, gesäuerter NDCs mit der Zusammensetzung nach einem der Ansprüche 1 bis 9 verwendet wird.

**Revendications**

1.  Crème non laitière (NDC) aigre, mouillée en permanence, exempte de carbonate de calcium et/ou d'émulsifiants, comprenant 15 % à 60 % en poids d'une matière grasse triglycéridique et d'un composant protéique caractérisée en ce que la NDC aigre est stable et peut être mangée à la cuillère et présentent les caractéristiques suivantes à 5 °C :
    a) une valeur d'élasticité supérieure à 50 Pa extrapolée à partir de gradients de cisaillement compris entre 100 s$^{-1}$ et 300 s$^{-1}$ (Bingham) ;
    b) une viscosité de Bingham inférieure à 500 mPa.s entre les gradients de cisaillement compris entre 100 s$^{-1}$ et 300 s$^{-1}$
    c) une rupture à la contrainte à une déformation inférieure à 0,5 radians.

2.  NDC aigre selon la revendication 1, dans laquelle le pH de la NDC est compris entre 4,0 et 4,8.

3.  NDC aigre selon les revendications 1 et 2, dans laquelle la teneur en matière grasse est comprise entre 25 % et 45 % du poids.

**4.** NDC aigre selon les revendications 1 à 3, dans laquelle la matière grasse est au moins l'une du groupe se composant d'huile de coeur de palmier, d'huile de soja, d'huile de colza, d'huile de coco, d'huile de tournesol, d'huile de carthame, de matières grasses du lait, de sucrose, d'esters de polyacides gras, ou des fractions entièrement ou partiellement hydrogénées de ceux-ci, à la condition requise que la matière grasse du lait soit toujours mélangée avec une graisse végétale.

**5.** NDC aigre selon la revendication 4, dans laquelle la matière grasse du lait est présente dans des quantités comprises entre 0 % et 40 % en poids de la phase totale de matières grasses.

**6.** NDC aigre selon la revendication 1, dans laquelle la matière grasse est une huile complètement liquide ou un mélange d'huiles liquides.

**7.** NDC aigre selon les revendications 1 à 6, dans laquelle la NDC contient 1,0 % à 15,0 % en poids de poudre de lait entier et/ou de poudre de lait écrémé comme composant protéique.

**8.** NDC aigre selon la revendication 7, dans laquelle la teneur en poudre de lait entier et/ou en poudre de lait écrémé est comprise entre 4,0 % et 12,0 % du poids.

**9.** NDC aigre selon les revendications 1 à 8, dans laquelle la taille de goutte des gouttelettes de matière grasse est inférieure à 5,0 $\mu$m, de préférence inférieure à 2,0 $\mu$m.

**10.** Procédé pour préparer une NDC aigre comprenant les étapes de :
- fabrication d'un pré-mélange de matière(s) grasse(s) végétale(s), de composant(s) protéique(s) et d'eau ;
- chauffage du pré-mélange entre 40° et 90° C ;
- homogénéisation du pré-mélange au moins en une étape unique sous pression ;
- refroidissement du pré-mélange homogénéisé à une température de 2° à 30° C ;
- addition d'un milieu de culture au pré-mélange pouvant transformer le lactose en acide lactique par fermentation ;
- fermentation du pré-mélange jusqu'à un pH de 4,0 à 4,6 ;
- stockage du pré-mélange fermenté à une température inférieure à 15° C, de préférence comprise entre 0° et 10° C.

**11.** Procédé selon la revendication 10, dans lequel une procédure d'homogénéisation en deux étapes est utilisée, en appliquant une pression de 10 à 250 bars à la première étape et de 20 à 100 bars à la deuxième étape.

**12.** Procédé selon les revendications 10 et 11, dans lequel le procédé est appliqué pour la préparation de NDC aigres, stables, pouvant se manger à la cuillère, avec la composition des revendications 1 à 9.